# EUROPEAN PATENT APPLICATION

(11) **EP 2 826 984 A1**
(43) Date of publication of application: **21.01.2015**
(21) Application number: 14171071.5
(22) Date of filing: 04.06.2014
(51) Int. Cl.: F02M 25/07, F02M 35/10, F02M 35/104

(54) **Intake system for internal combustion engine**

(30) Priority: 18.07.2013 JP 2013149717
(71) Applicant: AISIN SEIKI KABUSHIKI KAISHA, Kariya-shi, Aichi 448-8650 (JP)
(72) Inventor: Ito, Atsushi, Kariya-shi,, Aichi 448-8650 (JP); Mori, Keitaro, Kariya-shi,, Aichi 448-8650 (JP)
(74) Representative: TBK

(57) **Abstract**

An intake system (100) for an internal combustion engine includes a throttle-side intake tube (1), an external gas introducing port (11) introducing an external gas into at least one of the throttle-side intake tube (1) and a surge tank (2), and a plate portion (40) provided inside the mentioned at least one of the throttle-side intake tube (1) and the surge tank (2) being in communication with the external gas introducing port (11) and in a region on an axis line (AL) of the external gas introducing port (11) at a center portion of a fluid path cross-section having a distance from a vicinity of an outer periphery portion of the fluid path cross-section, the plate portion (40) restraining the external gas that is introduced from the external gas introducing port (11) from flowing to the vicinity of the outer periphery portion of the fluid path cross-section by blocking the external gas at the center portion of the fluid path cross-section.

## Description

### TECHNICAL FIELD

This disclosure generally relates to an intake system for an internal combustion engine.

### BACKGROUND DISCUSSION

A known intake system for an internal combustion engine for introducing an external gas to a throttle-side intake tube is disclosed in JP2010-144669A (i.e., hereinafter referred to as Patent reference 1).

The intake system for the internal combustion engine disclosed in Patent reference 1 includes an intake tube (throttle-side intake tube) that introduces intake air to a main tube portion (surge tank) from a throttle and an EGR tube (exhaust gas recirculation tube) that introduces the exhaust gas recirculation gas into the intake tube. According to the intake system disclosed in Patent reference 1, an outlet portion of the EGR tube positioned protruding into the intake tube is slanted to face the main tube portion side (downstream side). Thus, a flow of the EGR gas introduced from the EGR tube is directed towards the downstream side so that the concentration, or density of the EGR gas introduced into each of cylinders is uniformized.

Notwithstanding, according to the intake system for the internal combustion engine disclosed in Patent reference 1, in a case where the volume of the introduced EGR gas from the EGR tube to the intake tube (throttle-side intake tube) (i.e., EGR gas flow rate) increases to some extent, the EGR gas (external gas) introduced from the EGR tube to the intake tube (throttle-side intake tube) flows straight crossing, or intersecting in the intake tube to reach an external periphery portion (inner wall surface) of the intake tube and to move along the external periphery portion of the intake tube. The external periphery portion is positioned opposing to the EGR tube. Particularly, in a case where the throttle is slightly open (i.e., half-open state), because the velocity of the flow is assumed to be higher within a region where the air flows to the downstream side via a slight clearance between a valve (valve body) and the outer periphery portion (inner wall surface) of a conduit, or fluid path along the outer periphery portion, the EGR gas that moves along the outer periphery portion of the intake tube is carried by the fast-flow of the intake air flowing along the outer periphery portion to the downstream side without spreading, or without being mixed. Thus, according to the known intake system for the internal combustion engine disclosed in Patent reference 1, the precisions for distributing the EGR gas (external gas) to each of the cylinders is not sufficient.

A need thus exists for an intake system for an internal combustion engine which enhances the precision for distributing an external gas to each of cylinders.

### SUMMARY

In light of the foregoing, the disclosure provides an intake system for an internal combustion engine, which includes a throttle-side intake tube including a first end connected to a throttle and a second end connected to a surge tank, an external gas introducing port provided at at least one of the throttle-side intake tube and the surge tank and introducing an external gas into the mentioned at least one of the throttle-side intake tube and the surge tank, and a plate portion provided inside the mentioned at least one of the throttle-side intake tube and the surge tank being in communication with the external gas introducing port and in a region on an axis line of the external gas introducing port at a center portion of a fluid path cross-section having a distance from a vicinity of an outer periphery portion of the fluid path cross-section, the plate portion restraining the external gas that is introduced from the external gas introducing port from flowing to the vicinity of the outer periphery portion of the fluid path cross-section by blocking the external gas at the center portion of the fluid path cross-section.

According to the intake system for the internal combustion engine of the disclosure, by providing a plate portion provided inside the mentioned at least one of the throttle-side intake tube and the surge tank being in communication with the external gas introducing port and in a region on an axis line of the external gas introducing port at a center portion of a fluid path cross-section having a distance from a vicinity of an outer periphery portion of the fluid path cross-section, the plate portion restraining the external gas that is introduced from the external gas introducing port from flowing to the vicinity of the outer periphery portion of the fluid path cross-section by blocking the external gas at the center portion of the fluid path cross-section, the external gas that is otherwise crossing the fluid path after being introduced from the external gas introducing port is restrained from reaching the outer periphery portion of the fluid path cross-section (inner wall surface of the fluid path), or the vicinity of the outer periphery portion of the fluid path cross-section (inner wall surface of the fluid path). Accordingly, even when the throttle is open slightly (half-open state) and the high speed zone where flow speed is high is formed in the vicinity of the outer periphery portion (inner wall surface of the fluid path) of the fluid path cross-section, the external gas is prevented from being carried to the downstream side without diffusing. In consequence, the external gas is restrained from flowing without diffusing and the distribution precision of the external gas to each cylinder can be further enhanced. Further, even when the plate portion is provided in the fluid path, by reducing the thickness of the plate shaped plate portion sufficiently, the pressure loss caused by the plate portion can be restrained, thus restraining an adverse effect to an output of the internal combustion engine. Because the more the introduced volume of the external gas is increased, the more external gas reaching the outer periphery portion of the fluid path cross-section is likely to increase, the intake system for the internal combustion engine of the disclosure is particularly effective for a case where the volume of the external gas introduced from the external gas introducing port is increased (i.e., in an operation state where ratio of the external gas is higher).

According to the disclosure, the plate portion includes a recessed cross-sectional configuration that opens towards the external gas introducing port at a part of the fluid path cross-section at which the plate portion is provided and a thin-plate configuration that extends along a flowing direction of an intake air introduced from the throttle.

According to the construction of the disclosure, because the external gas flowing straight from the external gas introducing port is accommodated inside the recessed-shape plate portion to circulate, the external gas blocked by the plate portion is effectively restrained from leaking to the vicinity of the outer periphery portion of the fluid path (inner wall surface) via an end of the plate portion. In consequence, the external gas is effectively restrained from being carried without diffusing. Further, by forming the plate portion in the thin-plate configuration, the pressure loss caused by the plate portion can be restrained to the minimum.

According to the disclosure, the plate portion includes the recessed cross-sectional configuration that opens towards the external gas introducing port and formed in one of an arc shape, a U-shape, and a V-shape.

According to the construction of the disclosure, the recessed cross-sectional configuration can be readily formed with the plate potion having the thin-plate configuration.

According to the disclosure, the plate portion includes an opening width of the recessed cross-sectional configuration at the fluid path cross-section at which the plate portion is provided is greater than an inner diameter of the external gas introducing port.

According to the construction of the disclosure, the external gas introduced from the external gas introducing port to flow straight to otherwise cross the fluid path can be guided into the opening of the plate portion to be accommodated therein. In consequence, because greater volume of the external gas can be accommodated in the recessed plate portion, the external gas can be more effectively restrained from reaching the high speed zone where the flow speed is high at, or in the vicinity of the outer periphery portion of the fluid path (inner wall surface).

According to the disclosure, the plate portion extends towards at least one of an upstream side and a downstream side of a flowing direction of an intake air relative to the axis line of the external gas introducing port.

According to the construction of the disclosure, by the plate portion extending towards at least one of the upstream side and downstream side, the external gas stopped by the plate portion is restrained from leaking to the vicinity of the outer periphery portion of the fluid path (inner wall surface) in a wide range in the flowing direction of the intake air. In consequence, the external gas is effectively restrained from reaching the high speed zone where the flow speed is high and from being carried without diffusing.

According to the disclosure, the plate portion is provided extending from an inside of the throttle-side intake tube to an inside of the surge tank at the downstream side.

According to the construction of the disclosure, while maintaining the state where the external gas blocked at the center portion of the fluid path cross-section is restrained from reaching the vicinity of the outer periphery portion of the fluid path (inner wall surface), the external gas is carried to the surge tank while diffusing at the center portion of the fluid path. In consequence, the external gas is effectively diffused to enhance the distribution precision of the external gas to each of the cylinders.

According to the disclosure, the intake system for an internal combustion engine further includes plural distribution ports branched from the surge tank and configured to be connected to a plurality of cylinders of the internal combustion engine, respectively. The plate portion is provided extending to a position of the one of the distribution ports positioned at the most upstream side among the distribution ports.

For example, in a case where an inlet of the distribution port is positioned opposite from the external gas introducing port relative to the fluid path center, the external gas that is carried without diffusing together with high speed flow in the vicinity of the outer periphery portion of the fluid path (inner wall surface that is opposite from the external gas introducing port) is likely to intensively flow into the distribution port positioned at the most upstream side. According to the construction of the disclosure, by elongating the plate portion to the distribution port at the most upstream side among the distribution ports, the volume of the external gas distributed to the distribution port at the most upstream side is reduced, and the external gas can be distributed to the other distribution ports at the relatively downstream side. Further, in a case where the inlet of the distribution port is positioned at the same side with the external gas introducing port, the external gas that is carried with the high speed flow in the vicinity of the outer periphery portion of the fluid path (inner wall surface opposite from the external gas introducing port) is likely to intensively flow into the distribution port at the most downstream side among the distribution ports. In those circumstances, the volume of the external gas distributed to the distribution port at the most downstream side is reduced by means of the plate portion extended to the distribution port at the most upstream side, and the volume of the external gas distributed to other distribution ports at the relatively upstream side is increased by the reduced amount. Thus, the distribution volume of the external gas can be uniformized. Accordingly, the distribution precision of the external gas to each of the cylinders enhances.

According to the disclosure, the plate portion includes an upstream side end portion extending to an inside of a negative pressure turbulence zone which is generated at a downstream side of the throttle in a state where the throttle is in a half-open state.

According to the construction of the disclosure, the external gas which is blocked by the plate portion and directed towards the upstream side can be guided as it is, or intactly to the negative pressure turbulence zone. In consequence, because the external gas can be diffused (mixed, stirred) within the negative pressure turbulence zone, the external gas is effectively diffused into the intake air while effectively restraining the external gas from being carried as it is, or intactly without diffusing.

According to the disclosure, the plate portion is positioned in a vicinity of a negative pressure turbulence zone generated at a downstream side of the throttle in a state where the throttle is in a half-open state.

The half-open state indicates a state of the throttle between a fully open state and a fully closed state, and includes a state with a slight opening where the throttle is slightly open relative to the fully closed state. According to the construction of the disclosure, because the plate portion per se is positioned in the vicinity of the negative pressure turbulence zone, the external gas that is blocked by the plate portion and is directed towards the upstream side can be readily guided to the negative pressure turbulence zone in a state where there is the flow of the intake air that is directed to the downstream side. In consequence, because the external gas can be diffused (mixed, or stirred) in the negative pressure turbulence zone, the distribution precision of the external gas to each of the cylinders can be further enhanced.

According to the disclosure, a part of the fluid path cross-section at which the plate portion is provided includes a dimension greater than a dimension of a part of the fluid path cross-section provided at an upstream side relative to the portion where the plate portion is provided.

According to the construction of the disclosure, because the fluid path cross-sectional dimension of a portion at which the plate portion is provided is expanded compared to a portion at relatively upstream side to the portion at which the plate portion is provided, the reduction of the fluid path cross-sectional dimension because the plate portion is provided can be compensated. In consequence, even though the plate portion is provided, because an increase in the pressure loss of the intake air can be restrained, the distribution precision of the external gas to each of the cylinders can be enhanced by the plate portion while restraining the pressure loss of the intake air from increasing.

According to the disclosure, the intake system for an internal combustion engine further includes a support portion extending from an inner wall of the throttle-side intake tube to the plate portion and integrally formed with the plate portion, the support portion for supporting the plate portion.

According to the construction of the disclosure, the plate portion can be readily positioned at the center portion position that is away from, or has a distance from the vicinity of the outer periphery portion of the fluid path cross-section.
According to the disclosure, the intake system for an internal combustion engine further includes a first intake system body portion including a portion constructing the throttle-side intake tube and made of resin, and a second intake system body portion including a portion constructing the throttle-side intake tube and made of resin. The first intake system body portion and the second intake system body portion are joined by welding in a state where the support portion is interposed between the first intake system body portion and the second intake system body portion. The plate portion and the support portion are made of resin.

According to the construction of the disclosure, because the support portion can be joined to the intake system by welding simultaneous with when joining the first intake system body portion and the second intake system body portion by welding. Thus, for example, compared to a case where a plate portion and a support portion are assembled to an intake system after joining a first intake system body portion and a second intake system body portion, assembling process can be simplified, and the plate portion and the support portion can be provided to the intake system readily.

According to the disclosure, the external gas corresponds to one of a re-circulated exhaust gas, a blowby gas, and an evaporation fuel gas generated in a fuel tank.

According to the construction of the disclosure, by the plate portion, one of the recirculating exhaust gas, the blowby gas, and the evaporation fuel gas is restrained from being carried as it is, or intactly without diffusing, and thus the distribution precision of the external gas to each of the cylinders can be enhanced.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a plan view of an intake system according to an embodiment disclosed here;
Fig. 2 is a partial cross-sectional view of the intake system taken along line II-II in Fig. 1;
Fig. 3 is a cross-sectional view of the intake system taken along line III-III in Fig. 1;
Fig. 4 is an enlarged partially cutaway schematic view of the intake system showing a vicinity of a plate portion of the intake system shown in Fig. 1;
Fig. 5 is a partial cross-sectional view of the intake system taken along line V-V in Fig. 1;
Fig. 6 is a cross-sectional view of a plate portion of an intake system according to a first modified example of the embodiment disclosed here;
Fig. 7 is a cross-sectional view of a plate portion of an intake system according to a second modified example of the embodiment disclosed here;
Fig. 8 is a cross-sectional view of a plate portion of an intake system according to a third modified example of the embodiment disclosed here; and
Fig. 9 is a cross-sectional view of a plate portion of an intake system according to a fourth modified example of the embodiment disclosed here.

### DETAILED DESCRIPTION

Embodiments will be explained with reference to illustrations of drawings hereinafter.

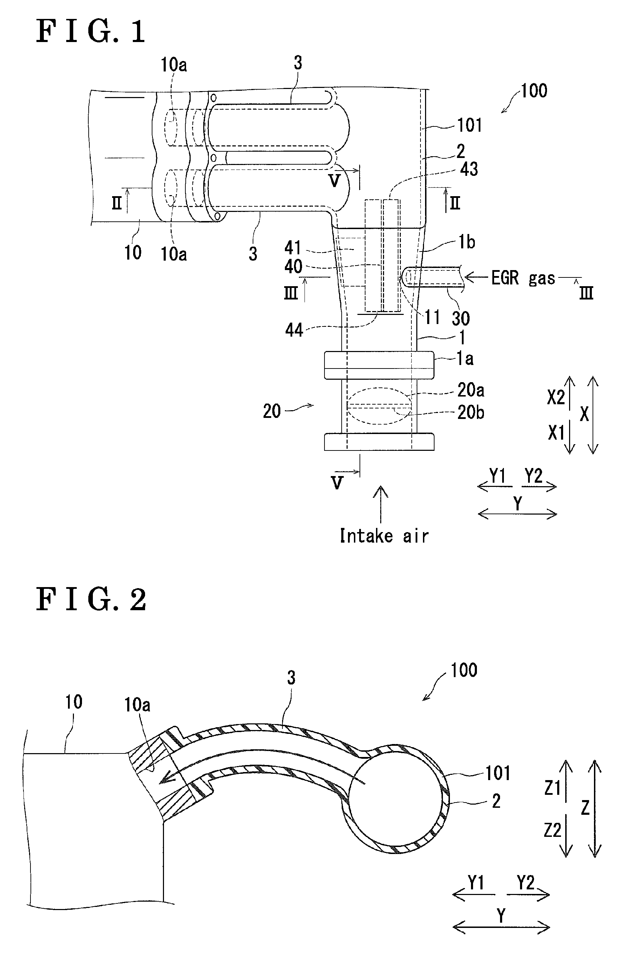

A construction of an intake system 100 for an internal combustion engine will be explained referring to Figs. 1 to 5.

The intake system 100 for the internal combustion engine according to the embodiment corresponds to an intake system for a multi-cylinder engine 10 for an automobile. As illustrated in Fig. 1, the intake system 100 is configured to receive the intake air that reaches via an air cleaner and a throttle 20. Further, the intake system 100 is provided at an upstream side of the multi-cylinder engine 10 to introduce the intake air to each cylinder of the multi-cylinder engine 10. Further, the intake system 100 is configured so that a re-circulated exhaust gas (EGR gas, or exhaust gas recirculation gas) returns thereto. The EGR gas is an example of an external gas.

As illustrated in Figs. 1 and 2, the engine 10 includes plural intake ports 10a each of which is provided at each cylinder. The intake ports 10a are connected to distribution ports 3 of the intake system 100, respectively. A throttle valve 20a that is a rotary throttle valve is provided at the throttle 20. A rotation shaft 20b of the throttle valve 20a is positioned extending in a lateral direction (i.e., horizontal direction, or Y-direction) that is orthogonal to an axial direction (X-direction) of the throttle 20. That is, the throttle valve 20a is configured to rotate about the rotation shaft 20b arranged to be positioned in the horizontal direction, that is, the throttle valve 20a is configured to rotate in an upward-downward direction (Z-direction) about the rotation shaft 20b.

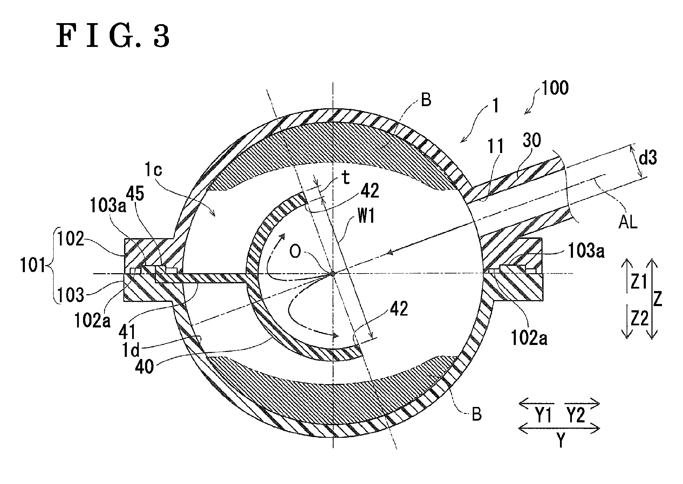

The intake system 100 includes a cylindrically shaped throttle-side intake tube 1 positioned at downstream side of the throttle 20, a surge tank 2 positioned at downstream side of the throttle-side intake tube 1, and plural distribution ports 3 positioned at downstream side of the surge tank 2. The throttle-side intake tube 1, the surge tank 2, and the plural distribution ports 3 are integrally formed by an intake system body 101 made of resin. As illustrated in Fig. 3, the intake system body 101 is partitioned into two portions in an upward-downward direction at the throttle-side intake tube 1. At the throttle-side intake tube 1, a first intake system body portion 102 provided at an upper side (Z1 side) and a second intake system body portion 103 provided at a lower side (Z2 side) are joined by the vibration welding to form the intake system body 101 (throttle-side intake tube 1).

As illustrated in Figs. 1 and 2, the surge tank 2 is formed in a circular tubular shape that extends along the axial direction (X-direction) of the throttle-side intake tube 1. The plural distribution ports 3 are connected to an upper portion side (Z1-direction side) of an outer periphery portion of the surge tank 2 and are arranged in parallel to each other along the axial direction (X-direction) of the tube of the surge tank 2. In a planar view, the distribution ports 3 are positioned at the surge tank 2 at a side opposite to an EGR tube (exhaust gas recirculation tube) 30, that is, the distribution ports 3 are positioned at a Y1-direction side relative to the surge tank 2, whereas the EGR gas tube 30 is positioned at a Y2-direction side relative to the surge tank 2.

As illustrated in Fig. 1, a first end 1 a (an end portion at an upstream side) of the throttle-side intake tube 1 is connected to the throttle 20 and a second end 1 b (an end portion at a downstream side) of the throttle-side intake tube 1 is connected to the surge tank 2. Further, as illustrated in Fig. 3, the throttle-side intake tube 1 includes a fluid path 1c having a circular cross-section (i.e., a cross-section of the fluid path that is orthogonal to a flowing direction X of the intake air, Y-Z cross-section, is circular). The single EGR gas tube 30 (see Figs. 1, 4, and 5) through which the EGR gas flows is attached at a middle position between the first end 1 a and the second end 1 b of the throttle-side intake tube 1. As illustrated in Fig. 3, the EGR gas tube 30 is formed so that a portion of the EGR gas tube 30 connected to the throttle-side intake tube 1 is directed to a center O of the circular cross-section of the fluid path 1 c of the throttle-side intake tube 1.

An external gas introducing port 11 for introducing the EGR gas into the throttle-side intake tube 1 is provided at the position corresponding to an end portion of the EGR gas tube 30. The EGR gas tube 30 and the fluid path 1c of the throttle-side intake tube 1 are in communication with each other via the external gas introducing port 11. In a cross-sectional view in Fig. 3, the external gas introducing port 11 is positioned at a slightly upper position (Z1-direction side) at a Y2-direction side portion of the throttle-side intake tube 1. Further, the external gas introducing port 11 is formed so that a center axis line AL of the external gas introducing port 11 (EGR gas tube 30) is directed to the center O of the fluid path cross-section of the throttle-side intake tube 1. The external gas introducing port 11 is formed to be flushed with an inner wall surface 1 d so as not to protrude to the inside (to the side closer to the center O) relative to the inner wall surface 1 d that structures the fluid path 1c of the throttle-side intake tube 1.

The EGR gas is introduced to the throttle-side intake tube 1 via the external gas introducing port 11 in a state where the throttle valve 20a is in a half-open state (partially open state). By recirculating the EGR gas introduced into the fluid path 1c and mixed with the intake air to the engine (each cylinder), a pumping loss can be reduced. Volume of the EGR gas to be introduced to the throttle-side intake tube 1 is controlled in response to an operation state of the engine. Particularly, the maximum volume of the EGR gas is introduced at a low load and low rotation engine operation range where an opening degree of the throttle valve 20a is small (throttle valve 20a is slightly open).

According to the construction of the embodiment, a plate portion 40 is provided in the throttle-side intake tube 1. The plate portion 40 restrains the EGR gas from flowing to the vicinity of an outer periphery portion of the fluid path cross-section (inner wall surface 1d) by checking, or blocking the EGR gas introduced from the external gas introduction port 11 at a center portion (around the center O) of the fluid path cross-section. A support portion 41 that extends in a radial direction of the fluid path 1 c from an inner wall of the throttle-side intake tube 1 to the plate portion 40 so as to support the plate portion 40 is integrally provided at the plate portion 40. According to the embodiment, the plate portion 40 and the support portion 41 are constructed as a single resin-made component.

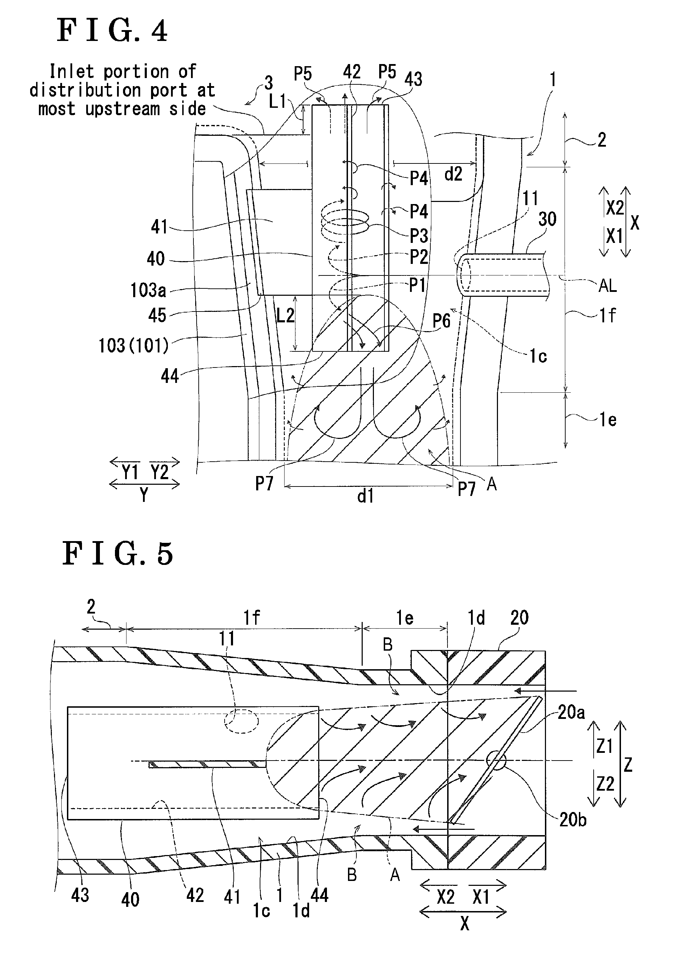

As illustrated in Fig. 4, the plate portion 40 is positioned in an expanded tube section 1f of the throttle-side intake tube 1 in the flowing direction (X-direction) of the intake air. More particularly, the throttle-side intake tube 1 is constructed in a manner that, as a diameter of the tube gradually increases towards downstream side, the cross-sectional dimension of the fluid path 1c gradually increases towards the downstream side. That is, the throttle-side intake tube 1 includes a constant section 1 e where the cross-sectional dimension (i.e., inner diameter) of the fluid path 1 c is constant (d1) and the expanded tube section f1 where the cross-sectional dimension (inner diameter) of the fluid path 1c gradually increases towards the downstream side (maximum inner diameter d2 > d1). The constant section 1e is positioned at an upstream side of the expanded tube section f1. Thus, the cross-sectional dimension (inner diameter) of the fluid path cross-section of a portion provided with the plate portion 40 of the throttle-side intake tube 1 (expanded tube section f1) is greater than the fluid path cross-section of a portion at an upstream side of the portion provided with the plate portion 40 (constant section 1e). Accordingly, the reduced fluid path cross-sectional dimension by providing the plate portion 40 is compensated. In consequence, according to the embodiment, in spite of being provided with the plate portion 40 in the expanded tube section f1, the actual fluid path cross-sectional dimension (i.e., the cross-sectional dimension where the intake air can circulate, or flow) of the expanded tube section f1 is equal to or greater than the fluid path cross-sectional dimension of the constant section 1e. Further, the plate portion 40 is positioned in the vicinity of a negative pressure turbulence zone A generated at a downstream side (X2 side) of the throttle valve 20a in a state where the throttle valve 20a is in a half-open state (partially open state).

Further, in the fluid path cross-section shown in Fig. 3, the plate portion 40 is provided in a region on the center axis line AL of the external gas introducing port 11 at the center O which has a distance from the outer periphery portion of the fluid path cross-section (inner wall surface 1d). Namely, the plate portion 40 is positioned to intersect with the center axis line AL of the external gas introducing port 11 at the center portion of the fluid path 1 c. The plate portion 40 includes a recessed cross-section that opens towards the external gas introducing port 11 at the fluid path cross-section at which the plate portion 40 and the external gas introducing port 11 are provided. That is, the plate portion 40 includes an opening 42 that opposes to, or faces the external gas introducing port 11. According to the embodiment, the plate portion 40 includes an arc-shaped recessed cross-section. The plate portion 40 is formed in a half-circular arc that is coaxial to the center O of the fluid path 1c and whose inner diameter is substantially constant.

The plate portion 40 is formed so that an opening width W1 of the opening 42 formed in a recessed shape at the fluid path cross-section where the plate portion 40 and the external gas introducing port 11 are provided is greater than an inner diameter d3 of the external gas introducing port 11. Further, the opening 42 of the plate portion 40 is positioned to face the external gas introducing port 11 front-to-front, or from the front. That is, an end surface of the plate portion 40 where the opening 42 is formed is orthogonal to the center axis line AL of the external gas introducing port 11.

Further, the plate portion 40 includes a thin plate configuration with a thickness t and extends in the X-direction along the flowing direction of the intake air from the throttle 20. The thickness of the plate portion 40 is substantially constant (t) over the entire length in the X-direction. The thickness t of the plate portion 40 is set to be a size that does not interfere (unlikely interfere) with the flow of the intake air from the throttle 20.

Further, as illustrated in Fig. 4, the plate portion 40 extended in the X-direction is arranged to extend in the upstream direction (X1 side) and in the downstream direction (X2 side) of the flowing direction of the intake air relative to the center axis line AL of the external gas introducing port 11.

At the downstream side, the plate portion 40 is provided to extend from the inside of the throttle-side intake tube 1 to the inside of the surge tank 2 provided at the downstream side. Further, as illustrated in Figs. 1 to 4, the plate portion 40 is extended to the position of the distribution port 3 at the most upstream side (X1 side) among the plural distribution ports 3 branched from the surge tank 2 and connected to the plural cylinders of the engine, respectively. Particularly, as illustrated in Fig. 4, a downstream-side end portion 43 of the plate portion 40 overlaps with an inlet portion of the distribution port 3 positioned at the most upstream side among the plural distribution ports 3 by length L1.

An upstream side end portion 44 of the plate portion 40 is extended to the inside of the negative pressure turbulence zone A in a state where the throttle valve 20a is in the half-open state. According to the embodiment, the plate portion 40 overlaps with the negative pressure turbulence zone A at the upstream side end portion 44 by length L2. In those circumstances, the negative pressure turbulence zone A is a wake flow region with the negative pressure that is formed behind (downstream side of) the throttle valve 20a when the opening degree of the throttle valve 20a is small, particularly. As illustrated in Fig. 5, the wake flow region is formed in a substantially oval, or elliptic shape that protrudes towards the downstream side when viewing in the cross-section (X-Z cross-section) along the fluid path 1 c. The dimension of the negative pressure turbulence zone A varies in accordance with the opening degree of the throttle valve 20a. According to the embodiment, the dimension of the negative pressure turbulence zone A formed when the introduced volume of the EGR gas is the maximum (the dimension of the negative pressure turbulence zone A with the opening degree of the throttle valve 20a where the introduced volume of the EGR is the maximum) is defined as a reference. As described above, because the introduced volume of the EGR gas becomes the maximum at the low load and low rotation engine operation range where the opening degree of the throttle valve 20a is small (when the throttle valve 20a is slightly open), the plate portion 40 is provided so that the upstream side end portion 44 extends inside the negative pressure turbulence zone A formed in a state where the opening degree of the throttle valve 20a is small (i.e., in a state where the introduced volume of the EGR gas is the maximum).

As illustrated in Fig. 4, the support portion 41 of the plate portion 40 includes a thin-plate configuration that extends in the X-direction along the flowing direction of the intake air. As illustrated in Fig. 3, the support portion 41 is joined to the inner wall at the Y1 direction side that is opposite from the external gas introducing port 11 positioned at the Y2 direction side in the throttle-side intake tube 1. The support portion 41 extends in a substantially horizontal direction. The support portion 41 supports the plate portion 40 at an end portion that has a distance from the inner wall surface 1 d. The support portion 41 supports the plate portion 40 so that the center of the arc of the arc shaped plate portion 40 is positioned at, or corresponds to the center O of the fluid path 1 c.

Further, the support portion 41 is joined and fixed to the throttle-side intake tube 1 (first intake system body portion 102 and the second intake system body portion 103) by the vibration welding in a state where the support portion 41 is sandwiched by the first intake system body portion 102 and the second intake system body portion 103 (the support portion 41 is interposed between the first intake system body portion 102 and the second intake system body portion 103). Particularly, the support portion 41 includes a welding portion 45 at an end portion at the inner wall side thereof. The welding portion 45 structures a portion of a joint surface of the first intake system body portion 102 and the second intake system body portion 103 together with a second welding portion 103a of the second intake system body portion 103 provided at the lower position relative to the first intake system body portion 102. The second welding portion 103a of the second intake system body portion 103 and the welding portion 45 of the support portion 41 are welded to the first welding portion 102a of the first intake system body portion 102 by the vibration welding in a state where the second welding portion 103a and the welding portion 45 are pressed to the first welding portion 102a. Accordingly, the support portion 41 is fixed to the throttle-side intake tube 1 together with the plate portion 40.

Referring to Figs. 1, 3, 4 and 5, a mechanism that the EGR gas is spread, or diffused in the intake air introduced via the throttle 20 in a state where the throttle valve 20a is in the half-open state (i.e., partially open state) will be explained hereinafter.

In a state where the opening degree of the throttle valve 20a is small (when the throttle valve 20a is slightly open), as illustrated in Fig. 5, because a gap, or opening (air passage) between the throttle valve 20a and the inner wall surface 1d of the fluid path 1c is narrow, a high speed zone B (see hatched portions in Fig. 3) where the flow speed of the intake air is high is formed at the gap, or the opening (air passage) provided along the inner wall surface 1 d. Thus, the high speed zone B is formed at external periphery portions that are orthogonal to the rotation shaft 20b (see Fig. 1) at the fluid path cross-section (Y-Z cross-section) shown in Fig. 3. According to the embodiment, because the rotation shaft 20b is arranged in a horizontal direction (Y direction), the high speed zone B is formed in the vicinity of the inner wall surface 1d in each of upward-downward directions (Z-direction). The high speed zone B is formed in a flat shape that is approximately in parallel with the rotation shaft 20b. The negative pressure turbulence zone A (see Figs. 4 and 5) is formed in a central region of the fluid path 1c between the high speed zones B (upper and lower high speed zones B).

The EGR gas introduced into the throttle-side intake tube 1 via the external gas introducing port 11 when the throttle valve 20a is open slightly flows in a manner crossing, or intersecting the fluid path 1c straight (EGR gas crosses the fluid path 1c holding a straight motion). In a case where the plate portion 40 is not provided, the EGR gas reaches the outer periphery portion (inner wall surface 1d) of the fluid path 1c along the center axis line AL of the external gas introducing port 11 and flows to the high speed zone B provided along the inner wall surface 1d. Thus, in a case where the plate portion 40 is not provided, the undiffused EGR gas is carried together with the intake air in the high speed zone B to be unevenly distributed to the distribution ports 3 (particularly, carried to the distribution port 3 positioned at the most upstream side).

According to the construction of the embodiment, the EGR gas that flows crossing the fluid path 1c enters the opening 42 of the plate portion 40 and is blocked by, or interfered with a bottom portion of the plate portion 40. In consequence, the EGR gas does not reach the high speed zone B at the outer periphery portion of the fluid path 1c, and is diverged into an upstream side (P1) and a downstream side (P2) relative to the plate portion 40, as illustrated in Fig. 4, to stay in the plate portion 40 (center portion of the fluid path 1c). The EGR gas that is diverged to the downstream side (P2) moves to a downstream side (P3) while swirling along an arc shaped inner peripheral surface of the plate portion 40. In those circumstances, a portion (P4) of the EGR gas leaks outside from an end portion of the opening 42 of the plate portion 40 and a distributed region of the EGR gas in the fluid path 1c gradually increases (EGR gas is diffused, or spread). Then, when the EGR gas enters the surge tank 2 and reaches the downstream-side end portion 43, the EGR gas diffuses (P5) towards the downstream side in the surge tank 2. In those circumstances, because the downstream-side end portion 43 of the plate portion 40 extends to the position of the distribution port 3 at the most upstream side among the distribution ports 3, unbalanced, or uneven distribution of the EGR gas among the distribution ports 3 because of being distributed to the distribution port 3 positioned at the most upstream side is restrained.

On the other hand, the EGR gas (P1) diverged to the upstream side of the plate portion 40 is guided by the plate portion 40 to the upstream side end portion 44 while remaining in a center portion of the fluid path 1 c (i.e., around the center O) and reaches the negative turbulence zone A at the downstream side of the throttle valve 20a (P6). Then, the EGR gas (P6) is sucked towards the upstream side (X1 direction side) by the vacuum pressure, or negative pressure of the negative pressure turbulence zone A to flow backward (P7). Because the swirl as indicated with an arrow P7 in Fig. 4 is generated in the negative pressure turbulence zone A, the mixing, or diffusion of the EGR gas flowing backward in the negative pressure turbulence zone A and the intake air from the throttle 20 is accelerated. The EGR gas diffused in the negative pressure turbulence zone A is carried to the downstream side as a mixed air with the intake air. In consequence, the EGR gas introduced into the fluid path 1c is adequately diffused relative to the intake air and is distributed into the distribution ports 3 in a well-balanced manner.

According to the embodiment, by providing the plate portion 40 for restraining the EGR gas from flowing to, or to the vicinity of the outer periphery portion at the fluid path cross-section by blocking the EGR gas introduced from the external gas introducing port 11 at the center O, or at a center portion around the center O of the fluid path cross-section, where the plate portion 40 is positioned in the region of the center axis line AL of the external gas introducing port 11 at the center O, or at a center portion around the center O that has a distance from the outer periphery portion of the fluid path cross-section (inner wall surface 1 d of the fluid path 1 c), or in the vicinity of the outer periphery portion of the fluid path cross-section (inner wall surface 1d of the fluid path 1c) and inside the throttle-side intake tube 1 that is in communication with the external gas introducing port 11, the EGR gas is retrained from flowing to the outer periphery portion, or the vicinity of the outer periphery portion of the fluid path cross-section. Namely, the EGR gas that is otherwise directed to cross the fluid path 1 c from the external gas introducing port 11 is restrained from reaching the outer periphery portion of the fluid path cross-section (inner wall surface 1d of the fluid path 1c), or in the vicinity of the outer periphery portion of the fluid path cross-section (inner wall surface 1d of the fluid path 1c). Thus, even when the high speed region, or zone where the flow speed is high is formed at, or in the vicinity of the outer periphery portion of the fluid path cross-section (inner wall surface 1 d) in a case where the throttle 20 is in a half-open state (throttle 20 is slightly open), the EGR gas is prevented from being carried to the downstream side without diffusing. Consequently, the precision of the distribution of the EGR gas to each of the cylinders can be enhanced because the EGR gas is restrained from flowing without diffusing. Because the EGR gas that circulates through the outer periphery portion of the fluid path cross-section is likely to increase as the introduced volume of the EGR gas increases, the intake system 100 of the multi-cylinder engine 10 is particularly advantageous in a case where the volume of the introduced EGR gas from the external gas introducing port 11 is large (at the low load and low rotation engine operation range in which the ratio of the EGR gas is assumed to be higher).

According to the construction of the embodiment, the plate portion 40 is formed to have a recessed cross-section that opens towards the external gas introducing port 11 and a thin-plate form that extends in the X-direction along the flowing direction of the intake air from the throttle 20 and with thickness t. Thus, the EGR gas is accommodated inside the plate portion 40 with the recessed configuration so as to effectively restrain the EGR gas from leaking to the outer periphery portion of the fluid path 1c (inner wall surface 1d), or to the vicinity of the outer periphery portion of the fluid path 1 c (inner wall surface 1 d) via the end portion of the plate portion 40. As a result, the EGR gas is restrained from flowing without diffusing. Further, because the plate portion 40 is formed in a thin-plate configuration, pressure loss by the plate portion 40 can be restrained to the minimum level.

Further, according to the embodiment, the plate portion 40 is formed to have the arced recessed cross-section that opens towards the external gas introducing port 11. Thus, the recessed cross-section can be formed readily with the thin-plate shape plate portion 40.

According to the embodiment, the plate portion 40 is formed so that the opening width W1 of the opening 42 that is recessed at the fluid path cross-section is greater than the inner diameter d3 of the external gas introducing port 11. Thus, the EGR gas that flows straight from the external gas introducing port 11 can be introduced to be accommodated in the plate portion 40 via the opening 42. Because the greater volume of the EGR gas can be accommodated in the recessed plate portion 40, the EGR gas can be more effectively restrained from leaking to the high speed zone B that is positioned at, or in the vicinity of the outer periphery portion of the fluid path 1c (inner wall surface 1d).

Further, according to the embodiment, the plate portion 40 is formed to extend to both of the upstream side (X1 side) and the downstream side (X2 side) of the flowing direction of the intake air relative to the center axis line AL of the external gas introducing port 11. Accordingly, in a wide range in the flowing direction X of the intake air, the EGR gas is restrained from reaching the outer periphery portion of the fluid path 1 c (inner wall surface 1 d). In consequence, the EGR gas is effectively restrained from reaching the high speed zone B and from being carried without diffusing.

According to the embodiment, as described above, the plate portion 40 is provided extending from the inside of the throttle-side intake tube 1 to the inside of the surge tank 2 at the downstream side. Thus, the EGR gas can be carried to the surge tank 2 while diffusing at the center O, or at a center portion around the center O of the fluid path 1c while maintaining a state where the EGR gas is restrained from reaching the outer periphery portion of the fluid path 1c (inner wall surface 1d), or the vicinity of the outer periphery portion of the fluid path 1c (inner wall surface 1d). In consequence, the distribution precision, or distribution accuracy of the EGR gas to each cylinder is enhanced because the EGR gas is effectively diffused.

Further, according to the embodiment, as described above, the plate portion 40 is provided extending to the distribution port 3 that is positioned at the most upstream side (X1 side). According to the construction in which the inlet of the distribution port 3 is positioned opposite from the external gas introducing port 11 (Y1 side), as described in the embodiment, provided that the EGR gas is carried together with the flow in the high speed zone B without diffusing, the flow of EGR gas tends to intensively flow into the distribution port 3 positioned at the most upstream side among the plural distribution ports 3. By the extension of the plate portion 40 to the distribution port 3 positioned at the most upstream side among the plural distribution ports 3, the distribution volume of the EGR gas to the distribution port 3 at the most upstream side is reduced and the EGR gas can be distributed to the distribution ports 3 positioned at the downstream side relative to the most upstream-side distribution port 3. Accordingly, the distribution precision of the EGR gas to each cylinder is enhanced.

According to the embodiment, as described above, the plate portion 40 is formed so that the upstream side end portion 44 extends inside the negative pressure turbulence zone A that is generated at the downstream side of the throttle valve 20a in a state where the throttle 20 is half-open. According to the foregoing construction, the EGR gas that is blocked by the plate portion 40 and directed to the upstream side (X1 direction) can be guided to the negative pressure turbulence zone A intactly. In consequence, because the EGR gas can be diffused (stirred, or mixed) in the negative pressure turbulence zone A, the diffusion of the EGR gas to the intake air can be performed more effectively. Further, by forming the plate portion 40 so that the upstream side end portion 44 extends inside the negative pressure turbulence zone A formed in a state where the opening degree of the throttle 20 is small (when the throttle 20 is slightly open) at the half-open state of the throttle 20 (where the introduced volume of the EGR gas is maximum), the EGR gas can be effectively diffused to the intake air even in a state where the introduced volume of the EGR gas is the maximum.

According to the embodiment, as described above, the plate portion 40 is positioned at, or in the vicinity of the negative pressure turbulence zone A generated at the downstream side of the throttle valve 20a when the throttle 20 is in the half-open state. Thus, because the plate portion 40 per se is positioned at, or in the vicinity of the negative pressure turbulence zone A, the EGR gas which is blocked by the plate portion 40 and directed to the upstream side (X1 direction) is readily guided to the negative pressure turbulence zone A to diffuse into the flow of the intake air that is directed to the downstream side (X2 direction).

Further, according to the embodiment, the fluid path 1c is structured so that the fluid path cross-section of the fluid path 1 c of a portion where the plate portion 40 is provided (expanded tube section 1f) has greater cross-sectional dimension than the cross-sectional dimension of the fluid path cross-section in the constant section 1e at the upstream side of the plate portion 40. Accordingly, because the reduction of the fluid path cross-section because of the plate portion 40 is compensated, an increase in the pressure loss of the intake air can be restrained. In consequence, while restraining an increase in the pressure loss of the intake air, the distribution precision of the EGR gas to each cylinder is enhanced by the plate portion 40.

Further, according to the embodiment, the support portion 41 extended from the inner wall of the throttle-side intake tube 1 to the plate portion 40 and supporting the plate portion 40 is integrally provided with the plate portion 40. Thus, the plate portion 40 is readily positioned at the center O position, or at a center portion around the center O, which has a distance from the outer periphery portion of the fluid path cross-section (inner wall surface 1d), or the vicinity of the outer periphery portion of the fluid path cross-section (inner wall surface 1 d).

Further, according to the embodiment, as described above, the first intake system body portion 102 and the second intake system body portion 103 are joined by means of welding in a state where the support portion 41 is sandwiched, or interposed between the first intake system body portion 102 and the second intake system body portion 103. Thus, because the support portion 41 can be welded to the intake system 100 simultaneously when joining the first intake system body portion 102 and the second intake system body portion 103 by welding, an assembling process is simplified, and the plate portion 40 and the support portion 41 can be readily provided to the intake system 100.

Further, according to the embodiment, as described above, the intake system 100 is structured to introduce the EGR gas (i.e., recirculating exhaust gas) serving as the external gas via the external gas introducing port 11. By the construction of the plate portion 40, the EGR gas is restrained from flowing without diffusing and the distribution precision of the EGR gas to each cylinder is enhanced.

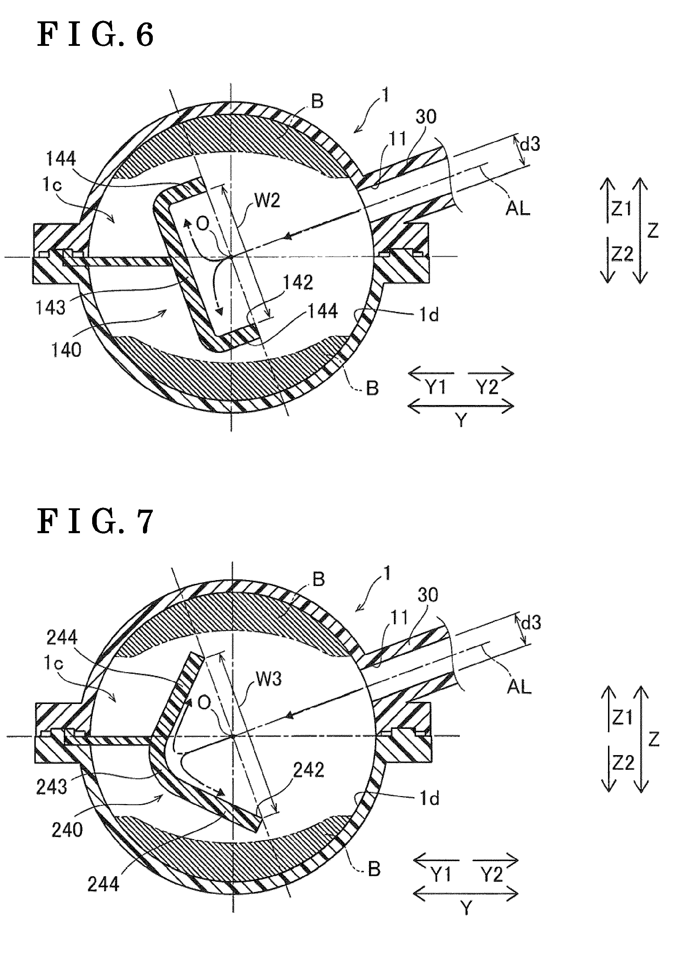

A first modified example of the embodiment will be explained hereinafter. According to the embodiment described above, the plate portion 40 includes the arc shaped recessed cross-section that opens towards the external gas introducing port 11. Alternatively, according to the first modified example of the embodiment, as illustrated in Fig. 6, a U-shaped plate portion 140 is provided. Explanations are not repeated for common constructions to the above-explained embodiment.

The plate portion 140 according to the first modified example of the embodiment includes a U-shaped recessed cross-section that opens towards the external gas introducing port 11 as illustrated in Fig. 6. More particularly, the plate portion 140 includes an opening 142 having an opening width W2 and a pair of side wall portions 144 that extend to a bottom portion 143 where an inner dimension of the side wall portions 144 in the opening width direction is substantially constant. The bottom portion 143 is formed in a substantially flat shape.

Further, according to the plate portion 140, the opening width W2 of the opening 142 is greater than the inner diameter d3 of the external gas introducing port 11. The opening 142 of the plate portion 140 is formed to face the external gas introducing port 11 front-to-front. That is, an end surface where the opening 142 of the plate portion 140 is formed (in other words, bottom portion 143) is orthogonal to the center axis line AL of the external gas introducing port 11.

Other construction of the plate portion 140 of the first modified example is the same with the above-described embodiment. According to the plate portion 140 that includes the U-shaped lateral cross-sectional configuration of the first modified example, the recessed cross-sectional configuration can be readily formed with a thin plate configuration. Alternatively, the plate portion 140 may include a U-shaped configuration in which the bottom portion 143 is formed in an arc shape.

The same advantages and effects to the above-explained embodiment can be attained according to the plate portion 140 having the U-shaped configuration according to the first modified example.

According to a second modified example of the embodiment described in Fig. 7, a V-shaped plate portion is provided.

According to the second modified example, as illustrated in Fig. 7, a plate portion 240 includes a V-shaped recessed cross-section that opens towards the external gas introducing port 11. Particularly, the plate portion 240 includes an opening 242 with an opening width W3 and a pair of side wall portions 244 that extend to a bottom portion 243 in a manner that an inner dimension in the opening width direction proportionally or gradually reduces. The bottom portion 243 is formed in an arc shape (round shape) at a portion where the side wall portions 244 join together.

The opening with W3 of the opening 242 of the plate portion 240 is greater than the inner diameter d3 of the external gas introducing port 11. The opening 242 of the plate portion 240 is formed to face the external gas introducing port 11 front-to-front. That is, an end surface where the opening 242 of the plate portion 240 is formed (a plane surface that passes distal end portions of the side wall portions 244 serving as a pair) is orthogonal to the center axis line AL of the external gas introducing port 11.

Other constructions of the plate portion 240 of the second modified example is the same with the embodiment described above. According to the plate portion 240 that includes the V-shaped lateral cross-sectional configuration according to the second modified example, the recessed cross-sectional configuration is readily formed with a thin-plate configuration. According to an alternative construction, the plate portion 240 may be formed by connecting the side wall portions 244 in a form of lines (plane surfaces) so as to be formed in a V-shape so that the bottom portion 243 includes an acute angle corner portion.

According to the plate portion 240 having the V-shape configuration of the second modified example, the same advantages and effects to the embodiment can be attained.

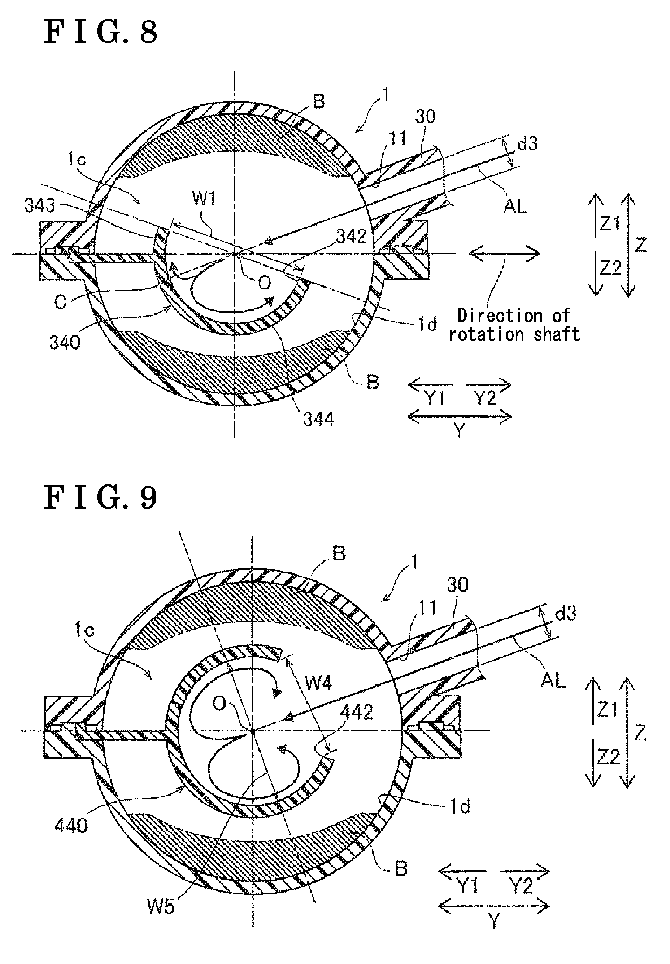

A third modified example of the embodiment will be explained hereinafter. According to the embodiment described above, the plate portion 40 is formed in a manner that the opening 42 of the plate portion 40 faces the external gas introducing port 11 front-to-front. According to the third modified example of the embodiment shown in Fig. 8, a plate portion is formed in a manner that an opening portion slants relative to the center axis line AL of the external gas introducing port 11 without facing the external gas introducing port 11 front-to-front.

As illustrated in Fig. 8, a plate portion 340 of the third modified example includes an arc shaped recessed cross-sectional configuration that opens towards the external gas introducing port 11. According to the third modified example, while an opening 342 of the plate portion 340 opens facing the external gas introducing port 11, the opening 342 slants without facing the external gas introducing port 11 front-to-front. The arc of the plate portion 340 is configured similarly to the plate portion 40 (see Fig. 3) of the embodiment and includes the opening width W1 that is the same with the construction of the embodiment.

The opening 342 of the plate portion 340 slants to face relatively upward (Z1 direction) from the lower side relative to the center axis line AL of the external gas introducing port 11. That is, the plate portion 340 is arranged in a slanting manner so that the opening 342 faces relatively upward (Z1 direction) to receive the EGR gas from the lower side relative to the center axis line AL of the external gas introducing port 11. Thus, whereas the end surfaces of the plate portion 40 where the opening 42 is formed are orthogonal to the center axis line AL of the external gas introducing port 11 according to the embodiment, end surfaces of the plate portion 340 where the opening 342 is formed are positioned intersecting with the center axis line AL with an angle less than 90 degrees, acute angle. Thus, the plate portion 340 is formed so that a portion 343 extending upward (Z1 direction) from an intersection point C of the center axis line AL and the plate portion 340 is shorter than a portion 344 extending downward (Z2 direction) from the intersection point C.

The direction of the opening 342 is defined on the basis of a direction of the rotation shaft 20b of the throttle valve 20a (that is, the position of the high speed zone B in the fluid path cross-section) and the position and the direction of the external gas introducing port 11. According to the third modified example, because the rotation shaft 20b extends in the Y-direction, the high speed zone B is formed at upper and lower outer periphery portions (Z-direction) of the fluid path cross-section. Further, the EGR gas introduced from the external gas introducing port 11 is introduced to the fluid path 1 c from a slightly upper position along the center axis line AL in a slightly downward direction. Because the EGR gas is likely to reach the high speed zone B at the lower position (Z2 side) due to the foregoing positional relationship, according to the third modified example, the plate portion 340 is formed so that the opening 342 faces upward in a manner receiving the center axis line AL, thus to ensure the portion 344 extending downward (Z2 direction) from the intersection point C in the plate portion 340 to be broad. Accordingly, the EGR gas is restrained from leaking to the outer periphery portion (inner wall surface 1d) of the fluid path 1c more effectively. Likewise the third modified example, the direction of the opening 342 may be determined in accordance with the direction of the rotation shaft 20b, the position of the external gas introducing port 11, and the direction of the center axis line AL (direction of the external gas introducing port 11).

Other construction of the plate portion 340 according to the third modified example is the same with the embodiment. According to the construction of the plate portion 340 of the third modified example, the same advantages and effects to the embodiment can be attained.

A fourth modified example of the embodiment will be explained as follows. According to the embodiment, the plate portion 40 is formed in a half-circular arc configuration. Alternatively, as illustrated in Fig. 9, according to the fourth modified example, a length of the arc of the plate portion is further extended.

A plate portion 440 according to the fourth modified example of the embodiment includes an arc-shaped recessed cross-sectional configuration that opens towards the external gas introducing port 11. According to the fourth modified example, the plate portion 440 is formed in an arced configuration having the length of arc longer than a half circle, or having an arc substantially three-fourth of a circle. Thus, the plate portion 440 according to the fourth modified example of the embodiment is configured so that the maximum width (i.e., diameter of the arc) W5 of the inside region of the recess is greater than the opening width W4. The plate portion 440 is formed so that the opening width W4 of the opening 442 is assumed to be greater than the inner diameter d3 of the external gas introducing port 11.

The opening 442 of the plate portion 440 faces the external gas introducing port 11 front-to-front. Other constructions of the plate portion 440 of the fourth modified example is common to the above-described embodiment. That is, the plate portion 440 having a constant cross-sectional configuration extends in the flowing direction of the intake air (X-direction).

According to the fourth modified example, because the length of the arc of the plate portion 440 is greater than the half circle, the EGR gas accommodated in the recessed plate portion 440 is further effectively restrained from leaking to the outer periphery portion of the fluid path 1c (inner surface 1 d) via the opening 442.

The opening width W4 of the plate portion 440 may be formed to have a dimension equal to or greater than the inner diameter d3 of the external gas introducing port 11 at least in order to introduce and accommodate the EGR gas in the recessed plate portion 440 via the opening 442. Accordingly, the length of the arc of the arc shaped plate portion 440 may be elongated to the length where the opening width W4 accords to the inner diameter d3 of the external gas introducing port 11. The longer the length of the arc is, the more the EGR gas accommodated in the plate portion 440 is unlikely to leak outside. According to an alternative construction, the length of the arc of the plate portion 440 may be shorter than a half circle, for example, a fan shape.

The plate portion 440 functions as long as the opening 442 of the plate portion 440 is formed at the position corresponding to the external gas introducing port 11 at least (i.e., the position on the center axis line AL that opposes to, or faces the external gas introducing port 11). Thus, for example, the opening width W4 of the opening 442 may be further reduced at the position provided at the upstream side (X1 side) and the downstream side (X2 side) of the flowing direction relative to the external gas introducing port 11.

According to the plate portion 440 having the arc of substantially three-fourth circle length of the fourth modified example, similar advantages and effects to the embodiment can be attained.

According to the embodiment, the intake system for the internal combustion engine is applied to a multi-cylinder engine for an automobile, however, the application is not limited to the embodiment. The intake system for the internal combustion engine may be applied to an engine other than for automobiles.

According to the embodiment, the external gas introducing port and the plate portion are provided inside the throttle-side intake tube, however, the application is not limited to the embodiment. Alternatively, for example, the external gas introducing port and the plate portion may be provided inside the surge tank. Further, alternatively, the external gas introducing port and the plate portion may be provided inside both of the throttle-side intake tube and the surge tank.

According to the embodiment and the first to fourth modified examples of the embodiment, the plate portion including the recessed cross-sectional configuration that opens towards the external gas introducing port is disclosed, however, the construction is not limited to the foregoing. Alternatively, for example, the plate portion may be formed in a flat plate shape. Even with those configurations, by blocking the external gas at a center portion of a fluid path cross-section, the external gas is restrained from flowing towards the outer periphery portion of the fluid path cross-section, or towards the vicinity of the outer periphery portion of the fluid path cross-section.

According to the embodiment, the plate portion is provided extending from the throttle-side intake tube to the inside of the surge tank, however, the construction is not limited to the foregoing. Alternatively, for example, the plate portion may be provided only inside of the throttle-side intake tube that is in communication with the external gas introducing port. Further, according to the embodiment, the downstream side end portion of the plate portion extends to the position of the intake port (distribution port) that is the most upstream side among the intake ports (distribution ports) inside the surge tank, however, the construction is not limited. Alternatively, for example, the plate portion (downstream side end portion) may not be extended to the position of the intake port (distribution port) that is the most upstream side among the intake ports (distribution ports). Further, alternatively, the plate portion (downstream side end portion) may be extended to further downstream side relative to the position of the intake port (distribution port) that is the most upstream side among the intake ports (distribution ports). As long as the plate portion is positioned on the axis line of the external gas introducing port at least, the extending position of the plate portion can be varied.

According to the embodiment, the upstream side end portion of the plate portion extends inside the negative pressure turbulence zone, however, the construction is not limited. Alternatively, the upstream side end portion of the plate portion may not extend inside the negative pressure turbulence zone. For example, the plate portion may be extended to the position in front of the negative pressure turbulence zone. As long as the plate portion is positioned on the axis line of the external gas introducing port at least, the extending position of the plate portion can be varied.

Further, according to the embodiment, the dimension of the fluid path cross-section at which the plate portion is provided (expanded tube section 1f) is greater than the cross-sectional dimension of the constant section 1 e provided at the upstream side relative to the portion at which the plate portion is provided, however, the construction is not limited. Alternatively, the fluid path cross-section of the portion at which the plate portion is provided may be formed to be equal to the cross-section of other portions of the fluid path cross-section.

According to the embodiment, the support portion is sandwiched, or interposed between the first intake system body portion and the second intake system body portion and welded together to fix the plate portion, however, the construction is not limited. Alternatively, the support portion may be fixed to the intake system body portion by means of a fastening member, for example, a screw.

Further, according to the embodiment, the EGR gas is applied as an example of the external gas, however, the application of types of the gas is not limited. An external gas other than the EGR gas, for example, a blowby gas and an evaporation fuel gas (evaporation gas) that is generated in a fuel tank may be applied. Further, the application of the external gas is not limited to one type, and plural kinds of external gases may be introduced into at least one of the throttle-side intake tube and the surge tank.

An intake system (100) for an internal combustion engine includes a throttle-side intake tube (1) including an upstream side end connected to a throttle and a downstream side end connected to a surge tank (2), an external gas introducing port (11) provided at an outer periphery portion of at least one of the throttle-side intake tube (1) and the surge tank (2) and introducing an external gas into the mentioned at least one of the throttle-side intake tube (1) and the surge tank (2), and a plate portion (40) positioned on an axis line of the external gas introducing port (11) between the external gas introducing port (11) and an outer periphery portion of the mentioned at least one of the throttle side intake tube (1) and the surge tank (2), positioned opposite from the external gas introducing port (11), the plate portion (40) including a recessed cross-sectional configuration that opens towards the external gas introducing port (11).

According to the construction of the disclosure, the external gas flowing straight from the external gas introducing port (11) is accommodated in the recessed plate portion (40) to circulate, and the external gas is restrained from reaching the vicinity of the outer periphery portion of the fluid path cross-section (inner wall surface). Thus, even when the high speed zone where the flow speed is high is formed in the vicinity of the outer periphery portion of the fluid path cross-section (inner wall surface) when the throttle (20) is slightly open (half-open state), the external gas is prevented from flowing as it is to the downstream side without diffusing. In consequence, the external gas is restrained from being carried as it is without diffusing and the distribution precision of the external gas to each cylinder can be enhanced. Further, because the external gas can be accommodated inside the recessed plate portion (40), the external gas blocked by the plate portion (40) can be effectively restrained from leaking to the outer periphery portion of the fluid path (inner wall surface) via the end portion of the plate portion (40).

According to the construction of the disclosure, the distribution precision of the external gas to each cylinder can be further enhanced.

An intake system (100) for an internal combustion engine includes a throttle-side intake tube (1), an external gas introducing port (11) introducing an external gas into at least one of the throttle-side intake tube (1) and a surge tank (2), and a plate portion (40) provided inside the mentioned at least one of the throttle-side intake tube (1) and the surge tank (2) being in communication with the external gas introducing port (11) and in a region on an axis line (AL) of the external gas introducing port (11) at a center portion of a fluid path cross-section having a distance from a vicinity of an outer periphery portion of the fluid path cross-section, the plate portion (40) restraining the external gas that is introduced from the external gas introducing port (11) from flowing to the vicinity of the outer periphery portion of the fluid path cross-section by blocking the external gas at the center portion of the fluid path cross-section.

## Claims

1. An intake system (100) for an internal combustion engine, comprising:
a throttle-side intake tube (1) including a first end (1a) connected to a throttle (20) and a second end (1 b) connected to a surge tank (2);
an external gas introducing port (11) provided at at least one of the throttle-side intake tube (1) and the surge tank (2) and introducing an external gas into said at least one of the throttle-side intake tube (1) and the surge tank (2); and
a plate portion (40) provided inside said at least one of the throttle-side intake tube (1) and the surge tank (2) being in communication with the external gas introducing port (11) and in a region on an axis line (AL) of the external gas introducing port (11) at a center portion of a fluid path cross-section having a distance from a vicinity of an outer periphery portion of the fluid path cross-section, the plate portion (40) restraining the external gas that is introduced from the external gas introducing port (11) from flowing to the vicinity of the outer periphery portion of the fluid path cross-section by blocking the external gas at the center portion of the fluid path cross-section.

2. The intake system (100) for an internal combustion engine according to claim 1, wherein the plate portion (40) includes a recessed cross-sectional configuration that opens towards the external gas introducing port (11) at a part of the fluid path cross-section at which the plate portion (40) is provided and a thin-plate configuration that extends along a flowing direction of an intake air introduced from the throttle (20).

3. The intake system (100) for an internal combustion engine according to claim 2, wherein the plate portion (40) includes the recessed cross-sectional configuration that opens towards the external gas introducing port (11) and formed in one of an arc shape, a U-shape, and a V-shape.

4. The intake system (100) for an internal combustion engine according to either claim 2 or 3, wherein the plate portion (40) includes an opening width of the recessed cross-sectional configuration at the fluid path cross-section at which the plate portion (40) is provided is greater than an inner diameter of the external gas introducing port (11).

5. The intake system (100) for an internal combustion engine according to any one of claims 1 to 4, wherein the plate portion (40) extends towards at least one of an upstream side and a downstream side of a flowing direction of an intake air relative to the axis line (AL) of the external gas introducing port (11).

6. The intake system (100) for an internal combustion engine according to claim 5, wherein the plate portion (40) is provided extending from an inside of the throttle-side intake tube (1) to an inside of the surge tank (2) at the downstream side.

7. The intake system (100) for an internal combustion engine according to claim 6 further comprising:
a plurality of distribution ports (3) branched from the surge tank (2) and configured to be connected to a plurality of cylinders of the internal combustion engine, respectively; wherein
the plate portion (40) is provided extending to a position of the one of the distribution ports (3) positioned at the most upstream side among the distribution ports (3).

8. The intake system (100) for an internal combustion engine according to any one of claims 5 to 7, wherein the plate portion (40) includes an upstream side end portion (44) extending to an inside of a negative pressure turbulence zone (A) which is generated at a downstream side of the throttle (20) in a state where the throttle (20) is in a half-open state.

9. The intake system (100) for an internal combustion engine according to any one of claims 1 to 8, wherein the plate portion (40) is positioned in a vicinity of a negative pressure turbulence zone (A) generated at a downstream side of the throttle (20) in a state where the throttle (20) is in a half-open state.

10. The intake system (100) for an internal combustion engine according to any one of claims 1 to 9, wherein a part of the fluid path cross-section at which the plate portion (40) is provided includes a dimension greater than a dimension of a part of the fluid path cross-section provided at an upstream side relative to the portion where the plate portion (40) is provided.

11. The intake system (100) for an internal combustion engine according to any one of claims 1 to 10 further comprising:
a support portion (41) extending from an inner wall (1d) of the throttle-side intake tube (1) to the plate portion (40) and integrally formed with the plate portion (40), the support portion (41) for supporting the plate portion (40).

12. The intake system (100) for an internal combustion engine according to claim 11 further comprising:
a first intake system body portion (102) including a portion constructing the throttle-side intake tube (1) and made of resin;
a second intake system body portion (103) including a portion constructing the throttle-side intake tube (1) and made of resin; wherein
the first intake system body portion (102) and the second intake system body portion (103) are joined by welding in a state where the support portion (41) is interposed between the first intake system body portion (102) and the second intake system body portion (103); and
the plate portion (40) and the support portion (41) are made of resin.

13. The intake system (100) for an internal combustion engine according to any one of claims 1 to 12, wherein the external gas corresponds to one of a re-circulated exhaust gas, a blowby gas, and an evaporation fuel gas generated in a fuel tank.
